# DEMANDE DE BREVET EUROPEEN

(11) **EP 2 871 603 A1**
(43) Date de publication de la demande: **13.05.2015**
(21) Numéro de dépôt: 13192390.6
(22) Date de dépôt: 11.11.2013
(51) Int. Cl.: G06Q 10/10

(54) **Procédé pour stocker et afficher des liens vers des documents numériques, et support de données**

(71) Demandeur: Chappuis, Richard, 2900 Porrentruy (CH)
(72) Inventeur: Chappuis, Richard, 2900 Porrentruy (CH)
(74) Mandataire: P&TS SA (AG, Ltd.)

(57) **Abrégé**

Procédé pour stocker et afficher sur un espace graphique (1) d'un dispositif de traitement numérique des liens vers des documents numériques, comprenant le stockage d'au moins un lien (Iᵢ) vers un dit document numérique ; l'association à chaque lien (Iᵢ) d'au moins une date de validité (tᵢ) ou d'au moins une plage de dates de validité (t_{i-d}; t_{i-f}); l'association à chaque lien (Iᵢ) d'une position (xᵢ, yᵢ).

La sélection d'une plage de visualisation (11, 13, 15) permet l'affichage sur l'espace graphique du ou des liens (Iᵢ) qui sont associés à une date de validité (tᵢ) ou à une plage de dates de validité (t_{i-d} t_{i-f}) au moins partiellement comprise dans la plage de visualisation sélectionnée. Chaque lien (Iᵢ) est affiché dans l'espace graphique à la position qui lui est associée.

## Description

### Domaine technique

La présente invention concerne un procédé pour le traitement d'information stockable et affichable sur un espace graphique d'un dispositif de traitement numérique.

### Etat de la technique

L'interface graphique des systèmes d'exploitation d'ordinateurs personnels tels que Windows, OS-X, Linux etc (marques déposées) comporte généralement un bureau (« desktop ») s'affichant en fond d'écran. Le bureau constitue un espace graphique au-dessus duquel différents éléments de l'interface graphique, par exemple des fenêtres, des icônes, des barres de menus etc peuvent être positionnés et déplacés. Ce bureau possède un certain nombre de propriétés; il peut être associé à une couleur ou à une image que l'utilisateur peut choisir pour personnaliser son environnement.

Les icônes affichées sur le bureau correspondent généralement aux icônes des fichiers placés dans un répertoire donné. Le bureau constitue ainsi un mode de visualisation particulier du contenu de ce répertoire.

Il est donc très facile d'accéder au contenu de ce répertoire en fermant ou réduisant la taille de toutes les fenêtres affichées au-dessus du bureau. La plupart des systèmes d'exploitation, par exemple Windows XP, comportent un raccourci permettant d'afficher ce bureau en une seule opération. Pour cette raison, de nombreuses applications offrent la possibilité d'insérer des documents ou des fichiers de programme directement dans ce répertoire afin de permettre aux utilisateurs d'y accéder rapidement. De la même façon, de nombreux utilisateurs apprécient de placer des documents directement dans ce répertoire privilégié afin de les retrouver et de les ouvrir sans devoir naviguer dans l'arborescence de répertoires.

La taille du répertoire de bureau peut devenir importante lorsque de nombreux programmes ou documents volumineux sont stockés dans ce répertoire ; dans certains cas cela peut ralentir l'affichage du bureau.

Afin de limiter cette taille, de nombreux systèmes d'exploitation permettent de créer des raccourcis vers des fichiers et de placer ces raccourcis dans le répertoire du bureau par exemple. Dans le système d'exploitation Windows, les raccourcis (« file shortcuts ») sont constitués par des petits fichiers avec l'extension .Ink qui contiennent l'adresse (URI) d'un fichier source et des paramètres additionnels qui peuvent être passés au programme qui s'exécute en cliquant ce raccourci. Chaque raccourci peut en outre être associé à sa propre icône affichée sur le bureau. Les systèmes d'exploitation Mac OS X emploient une structure de raccourci équivalente appelée « alias ».

Le bureau de nombreux utilisateurs tend à être encombré par de nombreux documents ou raccourcis qui occupent peu à peu tout l'espace graphique disponible. Il est donc nécessaire de faire périodiquement de la place sur ce bureau pour remplacer les icônes des documents ou les raccourcis devenus obsolètes par de nouvelles icônes. Ce processus est fastidieux, en particulier lorsque le document original est placé sur le bureau ; il est en effet nécessaire dans ce cas de le déplacer dans un autre répertoire pour ne pas l'effacer définitivement.

Le système d'exploitation Mac OS X remplace depuis peu la notion de bureau par celle d' « espace » ; plusieurs espaces peuvent être créés pour différents projets ou activités, afin d'afficher différentes applications ou fenêtres. L'utilisateur peut choisir en tout temps l'espace dans lequel il souhaite travailler. Le nombre d'espaces qui peuvent être manipulés de manière confortable est cependant limité. De plus le passage d'un espace à un autre se fait par à coup, et l'ensemble des icônes des documents ou des raccourcis est identique pour tous les Spaces.

EP-A2-1054321 décrit un dispositif et une méthode de traitement de l'information, en particulier d'informations qui peuvent être affichées à l'écran d'un ordinateur sous forme d'étiquettes. Dans un mode de réalisation, l'état du bureau peut défiler dans le temps au moyen d'une interface graphique ou d'une mollette de sélection physique équipant l'ordinateur. Cette solution requiert le stockage systématique de toutes les informations affichées dans le répertoire du bureau de l'ordinateur, ce qui demande à ce répertoire un important espace de stockage informatique. Pour l'utilisateur, l'exigence d'un stockage systématique dans le répertoire du bureau implique soit le renoncement à l'usage d'autres répertoires de stockage d'informations, soit le doublement des informations sauvegardées dans d'autres répertoires. Dans le premier cas de figure, le risque est de rendre difficile la maniabilité de ce répertoire en raison d'une quantité croissante d'informations qui y sont sauvegardées. Dans le deuxième cas de figure, il existe un risque supplémentaire d'une perte de maitrise des copies lors d'une mise à jour successive des informations. D'autre part, l'effacement d'un document est irrémédiable ; il n'est pas possible de retrouver l'état du bureau à un instant antérieur si un des documents affichés a été supprimé dans l'intervalle.

Le bureau des systèmes d'exploitation répandus, ainsi que les bureaux de EP-A2-1054321, permet uniquement d'afficher des icônes de documents ou de raccourcis vers ces documents. Il n'est cependant pas possible d'ajouter facilement une information numérique quelconque, par exemple un numéro de téléphone ou les données d'un contact, sur ce bureau.

EP-A2-1074923 décrit une autre méthode de visualisation de données. Un des modes de réalisation prévoit l'affichage à l'écran de données disposées en cercles concentriques selon la date qui les caractérise afin de créer un effet de perspective. Les données peuvent être visualisées en parcourant l'échelle du temps vers le passé et respectivement vers le futur. Dans un autre mode de réalisation, l'association des données comprend la visualisation d'une échelle représentant un lapse de temps. Cependant, ce procédé permet uniquement de visualiser des informations contenues dans une base de données existante.

### Bref résumé de l'invention

Un but de l'invention est de proposer un procédé de traitement de documents numériques et d'autres informations exempt des limitations des procédés connus.

Un autre but est de proposer un espace graphique permettant de mémoriser et d'afficher des liens exempt des limitations des espaces graphiques connus.

Selon l'invention, ces buts sont atteints notamment au moyen d'un procédé pour stocker et afficher sur un espace graphique d'un dispositif de traitement numérique des liens vers des documents numériques, ou vers d'autres informations numériques, comprenant les étapes suivantes :
stockage d'au moins un lien vers un dit document numérique ;
association à chaque lien d'au moins une plage de dates de validité ;
association à chaque lien d'au moins une position;
sélection d'une plage de visualisation ;
affichage sur ledit espace graphique du ou des liens associés à une plage de dates de validité au moins partiellement comprise dans la plage de visualisation sélectionnée, chaque lien étant affiché dans le dit espace graphique à la position qui lui est associée.

Dans un mode de réalisation préférentiel, le procédé stocke et affiche sur l'espace graphique uniquement des liens vers des documents numériques, ou des liens vers des informations numériques, sans jamais stocker de documents ni de fichiers. L'espace de stockage informatique nécessaire est donc réduit, ce qui permet aussi un affichage et un défilement des liens plus rapides.

L'expression « espace graphique » désigne dans cette demande toute surface d'affichage sur un écran permettant d'afficher des informations, par exemple un bureau, une fenêtre, une zone réservée dans une application ou dans un navigateur etc. Dans un mode de réalisation préférentiel, l'espace graphique occupe le fond d'écran.

Il est ainsi possible de stocker dans l'espace graphique un nombre de liens plus important que ceux qui pourrait être affichés de manière lisible sur le bureau d'un écran d'ordinateur de taille déterminée, et de sélectionner les liens affichés à chaque instant.

Les liens sont avantageusement stockés dans une base de données. La base de données peut être disponible dans le terminal informatique qui affiche les liens, ou dans un serveur à distance accessible via un réseau tel que le réseau Internet par exemple.

Ce procédé permet également de sélectionner si un lien doit être affiché ou non en fonction de sa date de validité, ou d'une plage de dates de validité associée au lien, ou de plusieurs plages de validité associées au lien, en tenant compte de la plage de visualisation sélectionnée.

Dans un mode de réalisation, l'utilisateur peut ainsi faire défiler l'état des liens sur l'espace graphique en fonction d'une date courante qu'il peut sélectionner dans la plage de visualisation.

En modifiant la plage de visualisation, par exemple en revenant en arrière dans le temps, l'utilisateur peut ainsi retrouver des liens qui ont été « supprimés » (c'est-à-dire retirés de l'espace graphique), retirer des liens de l'espace graphique, revenir à la position horizontale ou verticale antérieure d'un lien, revenir au titre, à l'icône ou à la dimension attribués précédemment à ce lien, et/ou retrouver les connexions antérieures de ce lien par exemple.

Il est par exemple possible de visualiser l'état de la surface d'affichage à une date différente de la date actuelle, et de visualiser les liens qui étaient valides à cette date ou durant une plage de visualisation.

Dans un mode de réalisation, chaque lien est associé à plusieurs propriétés graphiques qui définissent son apparence sur l'espace graphique, par exemple à une position horizontale et verticale, à une dimension, à une image (icône) et/ou à un titre. Chaque lien valide dans la plage de visualisation sélectionnée est affiché dans l'espace graphique avec les propriétés graphiques valides par exemple à la date courante sélectionnée.

L'espace graphique affiché à une date de visualisation donnée est alors comparable au bureau (fond d'écran) avec un ou plusieurs liens affichés à des positions et des dimensions modifiables par l'utilisateur.

Les liens déposés sur l'espace graphique peuvent pointer vers un document numérique, par exemple sur un fichier numérique ou sur un répertoire, etc. Certains liens peuvent pointer vers des informations numériques telles qu'une portion du contenu d'un document numérique, vers un contenu extrait d'une base de données, d'une page Web, d'un service Web ou autre API, vers un e-mail, un contact ou un rendez-vous dans un gestionnaire d'information personnelle, etc. Par exemple, un lien peut pointer vers une donnée météorologique ou boursière isolée d'une base de données ou d'un service web.

Par exemple, dans un mode de réalisation, le procédé permet de déposer sur l'espace graphique des liens vers des contacts, sans que ce contact ne soit nécessairement associé à un fichier particulier.

Dans un mode de réalisation, l'utilisateur définit la couleur de fond ou l'image de fond dudit espace graphique. Cette couleur et/ou cette image peuvent être définis à l'aide de liens et être associés à des plages de validité. Ainsi, il est possible de revenir à la couleur et/ou à l'image de fond de l'espace graphique à une autre date.

Chaque lien peut être associé à au moins une date de début de validité. Chaque lien peut être associé à au moins une deuxième date de fin de plage de dates validité. La plage de dates de validité du lien peut ainsi être définie entre la date de début et la date de fin de plage de dates de de validité.

Un lien peut être associé à plusieurs plages de dates de validités discontinues. Par exemple, un lien peut être valide depuis une première date, devenir invalide depuis une deuxième date puis redevenir valide ultérieurement.

Le lien est uniquement affiché sur l'espace graphique si la plage de visualisation choisie recouvre au moins partiellement une des plages de dates de validité.

La plage de visualisation sélectionnée peut comprendre des dates dans le passé, dans le présent et dans le futur.

La plage de visualisation peut comporter une date de début de plage de visualisation, une date de fin de plage de visualisation, et une date courante entre la date de début et la date de fin de plage de visualisation.

La date courante peut être différente de la date actuelle et peut être choisie par l'utilisateur afin de visualiser l'état des liens à une autre date que la date actuelle.

La date courante peut être dans le passé, dans le présent ou dans le futur.

Le procédé peut comprendre l'affichage d'un symbole sur une ligne de temps à la position correspondant à la date courante sélectionnée.

La plage de visualisation peut donc comporter une portion de plage de post-visualisation entre le début de plage de visualisation et la date courante. La plage de visualisation peut aussi comporter une portion de plage de pré-visualisation entre la date courante et la fin de plage de visualisation.

La position à laquelle les liens sont affichés sur l'espace graphique est de préférence celle qui leur est associée à la date courante choisie.

La dimension dans laquelle les liens sont affichés est de préférence celle qui leur est associée à la date courante choisie.

Le texte et/ou l'image utilisés pour afficher un lien est de préférence celui qui leur est associé à la date courante choisie.

Par conséquent, dans un mode de réalisation préférentiel, tous les liens associés à au moins une plage de dates validité qui est au moins partiellement comprise dans la plage de visualisation sélectionnée sont affichés avec les propriétés graphiques (position, dimension, texte et/ou image) qui sont associées à ces liens à la date courante sélectionnée.

Lorsqu'un lien n'est pas valide à la date courante, mais que sa plage de dates de validité recouvre néanmoins la plage de visualisation choisie, il est néanmoins affiché. Si ce lien était valide avant la date courante, il est affiché à la dernière position, avec la dernière dimension et le dernier texte ou image qui lui sont associés à l'intérieur de la plage de post-visualisation. Si ce lien est uniquement valide après la date courante, il est affiché à la dernière position, avec la dernière dimension et le dernier texte ou image qui lui sont associés à l'intérieur de la plage de pré-visualisation.

Les liens affichés qui sont uniquement valides pendant la plage de post-visualisation sont de préférence affichés différemment des liens également valides à la date courante, de manière à ce l'utilisateur puisse reconnaître qu'ils ne sont plus valides à la date courante.

Les liens affichés qui sont uniquement valides pendant la plage de pré-visualisation sont de préférence affichés différemment des liens également valides à la date courante, de manière à ce l'utilisateur puisse reconnaître qu'ils ne sont pas encore valides à la date courante.

Les dates de début de plage de visualisation et de fin de plage de visualisation peuvent être sélectionnées de manière quasi continue. La date courante peut être choisie de manière quasi-continue. Dans un mode de réalisation, il est possible de déplacer un élément graphique de manière quasi-continue, par exemple pixel par pixel, pour modifier la date courante, la date de début ou la date de fin de plage de visualisation.

Quasi-continu signifie dans ce contexte que l'utilisateur a l'impression d'un déplacement ou d'un changement de taille de la plage de visualisation continu, sans à-coups. Dans ce but, les dates peuvent être incrémentées ou décrémentées avec un pas suffisamment fin pour être quasi imperceptible. Dans un mode de réalisation, les dates de début de plage de visualisation et de fin de plage de visualisation, ainsi que la date courante, peuvent être modifiées par sauts d'une minute, ou d'une seconde, ou même avec une granularité plus fine si l'on souhaite par exemple mémoriser les positions successives des liens entre deux emplacements et revoir sans à-coup les mouvements donnés aux liens ou même ceux donné au pointeur de la souris.

De manière préférentielle, les dates de début de plage de visualisation, de fin de plage de visualisation et/ou la date courante peuvent être modifiées en déplaçant un élément graphique le long d'une ligne de temps graduée. D'autres moyens d'adapter ces dates peuvent être imaginés, par exemple à l'aide de la roulette de la souris, d'un trackball, d'un menu, d'une boîte de dialogue, de différentes gestures via un écran tactile, etc.

De manière préférentielle, l'échelle de la ligne de temps peut être modifiée par l'utilisateur. Il est par exemple possible d'afficher sur l'espace graphique une ligne de temps correspondant à un jour, une semaine, un mois etc.

Le procédé peut comprendre l'affichage d'un symbole sur ladite ligne de temps à la position correspondant à la date actuelle (le présent). Il est aussi possible de prévoir l'affichage de symboles, par exemple de drapeaux, à des dates pré-mémorisées pour un déplacement rapide de la plage de visualisation.

Dans un mode de réalisation, la sélection d'un lien sur l'espace graphique provoque l'affichage de la ou des plages de dates de validité de ce lien. La sélection d'un lien peut être effectuée par exemple par un clic de souris, en appuyant sur ce lien sur un écran tactile, avec un outil de type lasso, avec un clic droit de souris, ou avec un raccourci clavier par exemple.

Dans un mode de réalisation, la sélection simultanée d'une pluralité de liens sur l'espace graphique provoque l'affichage d'une pluralité de plages de validité correspondant à tous les liens sélectionnés.

Dans un mode de réalisation, la sélection d'un lien sur l'espace graphique au moyen d'un double-clic ou d'un clic long ou d'une pression longue sur un écran tactile ou d'un raccourci clavier, par exemple, permet de traiter l'information représentée par le lien en ouvrant l'application représentée par ce lien. Par exemple, dans le cas particulier où le lien pointe vers un fichier, la sélection du lien permet d'ouvrir ce fichier avec l'application qui lui est associée, et d'afficher le fichier vers lequel pointe ce lien. L'utilisateur peut avantageusement choisir dans un menu l'application à utiliser pour ouvrir un lien.

Le procédé peut comprendre une étape d'édition de la ou des plages de dates de validités d'un lien en déplaçant un ou des éléments graphiques marquant le début ou la fin de cette plage sur une ligne de temps. Par exemple, il est possible de modifier la date de début de validité ou la date de fin de validité en faisant glisser un index au début ou à la fin de la plage.

Chaque lien affiché sur l'espace graphique peut être mémorisé sous forme d'enregistrement (« record ») dans une base de données. Chaque enregistrement peut comporter une adresse ou un pointeur, par exemple une adresse URI lorsque le lien représente un fichier ou document. Chaque enregistrement peut être associé à des propriétés associées à ce lien, par exemple à des propriétés graphiques telles qu'une icône, une position verticale et/ou horizontale, une dimension, un nom, etc. Les différents enregistrements ont de préférence tous la même taille et la même structure.

Chaque enregistrement de lien peut être lié à une ou plusieurs dates de début de validité et à une ou plusieurs dates de fin de validité, de façon à définir un nombre variable de plages de dates de validité.

Le nombre de plages de dates de validité associé dans la base de données à chaque lien peut être variable.

Dans un mode de réalisation, un lien peut être inséré manuellement par l'utilisateur sur l'espace graphique, par exemple à l'aide d'un menu, ou par drag and drop depuis un navigateur de fichier, depuis un contenu d'une application, etc.

Dans un mode de réalisation, un lien peut être inséré automatiquement sur l'espace graphique lors d'une interaction de l'utilisateur avec un document numérique, par exemple avec un fichier ou avec une information numérique.

Un lien vers un fichier peut être inséré automatiquement en sauvant ce fichier, ou un raccourci vers ce fichier, dans un dossier dont les fichiers sont affichés sur l'espace graphique.

Par exemple, un lien vers un contact dans une liste de contacts peut être créé et inséré automatiquement sur l'espace graphique lorsque l'utilisateur communique de manière électronique avec ce contact.

Un lien vers un fichier peut être inséré ou actualisé automatiquement lorsque l'information numérique pointée par ce lien change ou atteint un seuil. Par exemple, un lien peut être introduit automatiquement, ou actualisé, lorsque la température en un endroit donné, telle qu'indiquée par un service web, est en-dessous de 0° C.

Un lien vers un rendez-vous dans un calendrier électronique peut être créé et inséré automatiquement lorsque l'utilisateur créé, ouvre ou édite un rendez-vous dans un calendrier électronique.

Un lien peut aussi être créé et inséré automatiquement lorsque l'utilisateur créé, ouvre ou édite un fichier.

Un lien vers un e-mail peut être créé et inséré automatiquement lorsque l'utilisateur envoie ou retransmet un e-mail.

La plage de dates de validité associée à un lien peut être prolongée automatiquement, ou une nouvelle plage de dates de validité peut être créée automatiquement, lors d'une interaction de l'utilisateur avec un document numérique ou avec une information pointée par ce lien.

La plage de dates de validité associée à un lien peut être réduite automatiquement lorsque l'information pointée par le lien n'est plus sollicitée, devient obsolète, ou qu'elle est supprimée.

Dans un mode de réalisation, le procédé comporte une étape d'insertion d'un lien lᵢ, d'association à ce lien d'une position horizontale xᵢ et verticale yᵢ en fonction de la position à laquelle ce lien est placé sur l'espace graphique, d'association à ce lien d'une dimension et d'un nom, de détermination d'une date de début de validité de ce lien t_{i-d} correspondant à la date d'insertion du lien, et de détermination d'une date de fin validité de ce lien t_{i-f} à l'infini.

Dans un mode de réalisation, le procédé comporte une étape de remplacement de la date de fin de validité d'un lien (t_{i-f}) par la date courante de la plage de visualisation lorsque ce lien est retiré (« release ») de l'espace graphique, par exemple avec une commande d'effacement (« Delete »). De cette manière, l'effacement d'un lien ne provoque pas la suppression du fichier, ni même la suppression du lien, mais uniquement la mise à jour de la plage de dates de validité associée à ce lien. Il est ainsi possible de revenir facilement à l'état de l'espace graphique avant l'effacement du lien, simplement en déplaçant vers le passé la plage de post-visualisation. Il est aussi possible de retrouver l'apparence graphique précédente d'un lien en reculant la date courante choisie.

Le procédé peut comprendre une étape d'affichage de la ou des plages de dates de validité associées à un lien. De cette manière, il est possible de visualiser rapidement les plages de dates durant lesquelles un lien était valide, par exemple les dates pendant lesquelles on a travaillé avec le fichier ou avec l'information référencé par ce lien.

La plage de dates de validité associée à un lien peut être affichée à la demande en sélectionnant ce lien.

Le procédé peut comprendre une étape d'association à un lien lᵢ dont une plage de dates de validité est échue d'une nouvelle plage de dates de validité démarrant à la date courante de la plage de visualisation. Cette association peut être exécutée en réaction à une seule opération de l'utilisateur, qui peut s'appeler par exemple « recall ».

Dans un mode de réalisation, le procédé comporte une étape de création de connexions entre différents liens, ces connexions étant visualisées sur l'espace graphique. De cette manière, il est possible de connecter entre eux différents liens, par exemple des liens se rapportant à un sujet ou à un projet commun.

Les connexions peuvent être créées manuellement, par exemple par drag and drop, en entourant deux liens avec un lasso, en les sélectionnant dans une liste, etc.

Les connexions peuvent être créées automatiquement, par exemple lorsque l'utilisateur exploite deux fichiers ou deux informations dans une seule tâche.

Les connexions peuvent être créées automatiquement, par exemple à l'aide d'un module informatique qui détecte automatiquement que deux liens concernent un sujet commun.

Une connexion entre un-email et un contact peut être créée automatiquement lorsque le e-mail est envoyé au contact.

Au moins une connexion peut être associée à une plage de dates de validité de la connexion. Ainsi, une connexion peut être valide pendant une durée limitée, qui peut être différente de la durée de validité des liens connectés.

La ou les plages de dates de validité d'une connexion peuvent de préférence être affichées à la demande.

Le procédé peut comprendre une étape de recherche de liens partageant une connexion avec un autre lien déterminé. Il est ainsi possible de retrouver aisément des liens partageant une connexion avec un lien donné - même si les plages de validité sont différentes.

Le procédé peut comprendre une étape de filtrage de liens affichés au moyen de mots-clés introduits par l'utilisateur. Il est ainsi possible de retrouver rapidement des liens, y compris des liens associés à des plages de validité sans recoupement avec la plage de visualisation choisie.

Il est aussi possible de supprimer de la visualisation courante les liens ne correspondant pas un critère de filtrage choisi.

Dans un mode de réalisation, au moins un lien est associé à un indicateur de contexte d'utilisation du lien. Le procédé peut comprendre une étape de filtrage des liens affichés selon l'indicateur (ou les indicateurs) de contexte qui leur est associé.

L'indicateur de contexte peut varier de manière quasi continue entre plusieurs niveaux.

Dans un mode de réalisation, au moins un lien est associé à un indicateur de partage du document numérique pointé par le lien.

L'indicateur de partage peut varier de manière quasi continue entre plusieurs niveaux comprenant au moins les niveaux « Privé » et « public ».

La position d'un document, par exemple la position verticale, peut dépendre de l'indicateur de contexte et/ou de l'indicateur de partage associé à un lien.

Le procédé peut comprendre la sélection des liens affichés en fonction d'une plage de contexte et/ou d'une plage de partage que l'utilisateur peut choisir.

Les limites de la plage de contexte et/ou de partage peuvent être modifiables en continu.

Le procédé peut comprendre le stockage de plusieurs collections de liens, et une étape de sélection d'une collection parmi la pluralité de ces collections. Un utilisateur peut avoir par exemple une première collection de liens correspondant à un premier usage et une seconde collection de liens correspondant à un second usage.

La présente invention concerne également un support de données informatiques comprenant un programme informatique destiné à être exécuté par un système de traitement numérique pour lui faire exécuter un des procédés susmentionnés.

Cette solution présente notamment l'avantage par rapport à l'art antérieur de :
laisser à l'utilisateur le libre choix de l'emplacement des documents numériques, notamment des fichiers numériques, parmi les répertoire et/ou les mémoires internes, externes, et/ou connectées à distance à un dispositif de traitement ;
permettre l'intégration d'informations qui ne sont pas directement représentables par des fichiers ;
permettre des connexions entre des informations ou des documents habituellement segmentés par différentes applications ;
permettre d'utiliser ces connexions pour filtrer l'information (comme des tags) ;
libérer la place disponible sur le bureau en relâchant (Release) des liens qui ne sont plus d'actualité, sans pour autant les effacer ;
réduire l'espace de stockage informatique pour les documents affichés sur le bureau;
permettre de gérer, rechercher et visualiser l'évolution et l'historique de documents numériques ainsi que d'informations stockables et affichables sur un espace graphique d'un dispositif de traitement numérique;
permettre de traiter et d'afficher de manière efficace et efficiente les documents numériques.

### Brève description des figures

Des exemples de mise en oeuvre de l'invention sont indiqués dans la description illustrée par les figures annexées dans lesquelles :
La figure 1 illustre un espace graphique d'un dispositif de traitement numérique affichant des liens vers des documents numériques (ici des fichiers et des dossiers) selon l'invention.
Les figures 2 et 3 illustrent deux exemples du même espace graphique, la plage de visualisation étant différente. Les figures illustrent en outre les plages de validités des liens.
La figure 4 illustre un espace graphique d'un dispositif de traitement numérique affichant des liens ainsi et des connexions entre liens.
La figure 5 illustre un exemple de structure de base de données pour stocker les liens.

### Exemple(s) de mode de réalisation de l'invention

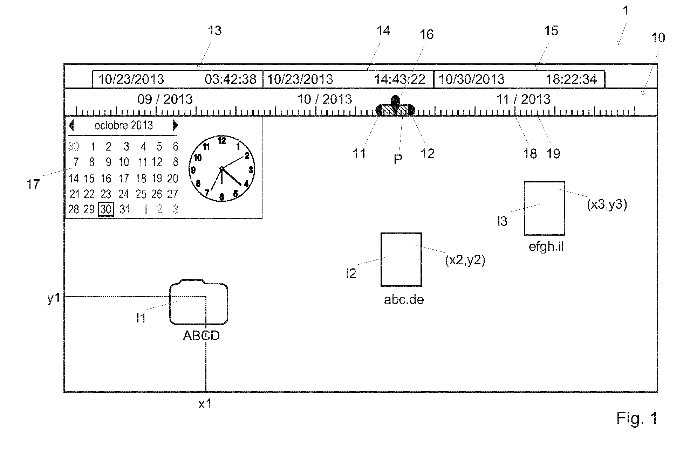

La figure 1 illustre un exemple d'espace graphique 1 qui peut être affiché sur un dispositif de traitement numérique. L'espace graphique 1 correspond à une zone rectangulaire qui peut avantageusement être utilisée comme fond d'écran (« bureau »), ou aussi dans une application ou une fenêtre. Dans un mode de réalisation, le procédé peut prévoir une étape de sélection et de mémorisation de la couleur de fond ou de l'image de fond de l'espace graphique par l'utilisateur.

Des liens l₁ à l₃ vers des documents numériques ABCD, abc.de et efgh.il sont affichés sur l'espace graphique à des positions horizontales xᵢ et verticales yᵢ déterminées. Chaque lien lᵢ pointe vers un document numérique, par exemple vers un fichier, vers un contenu, vers un dossier, vers un contact, vers une portion du contenu d'un fichier ou d'une base de données, vers une page web, etc.

Dans l'exemple illustré, les liens l₂ et l₃ pointent vers des fichiers tandis que le lien l1 pointe vers un dossier. Ces fichiers et/ou dossiers peuvent être mémorisés dans un répertoire ou une structure similaire d'une mémoire interne et/ou externe du dispositif, et/ou dans une mémoire ou structure similaire d'un dispositif connecté à distance.

Chaque lien lᵢ peut être représenté sur l'espace graphique 1 par une icône correspondant par exemple au fichier désigné, à l'application qui permet d'ouvrir ce fichier ou d'exploiter l'information pointée, à un aperçu miniaturisé de l'information, ou à un texte qui peut dépendre de l'information pointée par le lien. Un texte (par exemple un nom de fichier abc.de, un nom de dossier, un nom de contact etc) peut aussi être associé à chaque lien et affiché comme part de la représentation de ce lien.

Un lien lᵢ vers un document numérique peut être inséré manuellement par l'utilisateur sur l'espace graphique 1, par exemple en le sélectionnant dans une liste, par drag and drop depuis un navigateur de fichier, depuis un contenu affiché par une application, ou par n'importe quel procédé permettant à un utilisateur d'identifier une information numérique à insérer et d'introduire une commande d'insertion sur l'espace graphique.

Une autre possibilité peut être une création et insertion automatiquement d'un lien lᵢ vers une information numérique, par exemple un document numérique, lors d'une interaction de l'utilisateur avec cette information numérique, par exemple lorsque l'utilisateur duplique un lien, créé un fichier, qu'il l'ouvre, le sauve ou l'édite. Un lien lᵢ vers un contact peut être créé et inséré automatiquement lorsque l'utilisateur communique de manière électronique avec ce contact. Un lien vers un e-mail peut être créé et inséré automatiquement lorsque cet e-mail est reçu, envoyé, retransmis, déplacé. Un lien vers un rendez-vous peut-être inséré lors d'ajout ou d'édition de rendez-vous. D'autres liens vers d'autres types d'informations numériques peuvent être introduits automatiquement lors d'interaction de l'utilisateur avec cette information numérique ou lorsque cette information devient pertinente. Des liens peuvent aussi être insérés automatiquement, ou actualisés automatiquement, à intervalles périodiques et/ou lorsque l'information numérique pointée par le lien est modifiée. Par exemple, un lien pourrait indiquer la température locale extraite d'un service web météo ; le titre du lien correspondant à la valeur affichée est modifiée automatiquement à chaque changement de température, ainsi que la plage de validité associée à ce nouveau titre.

Avantageusement, le procédé peut prévoir la consultation de l'information numérique pointée par un lien lᵢ au moyen d'un double-clic ou d'un clic long ou d'une pression longue sur un écran tactile ou d'un raccourci clavier. Cette action provoque l'ouverture de l'application adéquate associée au lien. Par exemple, dans le cas particulier où le lien pointe vers un fichier, la sélection du lien permet d'ouvrir ce fichier au moyen de l'application adéquate. Le procédé peut aussi prévoir la consultation rapide (« quicklook ») d'un aperçu du contenu du document numérique pointé par le lien, par exemple en le sélectionnant avec la touche espace pressée.

Les liens sont avantageusement stockés dans une base de données, par exemple une base de données de type SQL ou avantageusement une base de liens de type HIP (Hyper Information Processing) tel que décrite dans la demande de brevet WO2008/043392 au nom du demandeur. La base de données peut être disponible dans le dispositif de traitement numérique ou dans le terminal informatique qui affiche les liens, ou dans un serveur à distance accessible via un réseau de communication numérique.

Lorsque les liens lᵢ représentent des fichiers numériques, la base de données stocke de préférence uniquement des références vers ces fichiers, sans jamais stocker les fichiers eux-mêmes. Cela permet de réduire l'espace de stockage informatique nécessaire et permet un affichage et un défilement des liens plus rapides.

Chaque lien lᵢ est associé à différentes propriétés graphiques qui définissent la façon dont il est représenté sur l'espace graphique 1. Par exemple, chaque lien peut être associé à une position horizontale, à une position verticale, à une dimension, à une image (icône) et à un texte.

La dimension du lien peut être déterminée par défaut à la création du lien. Le texte associé au lien, et son image, peuvent être générés automatiquement en fonction du document numérique vers lequel pointe le lien.

Les différentes propriétés graphiques définissant la représentation du lien peuvent être modifiées à n'importe quel instant par l'utilisateur. L'état antérieur de la propriété modifiée est cependant conservé, en sorte qu'il est possible d'y revenir à n'importe quel instant.

Ces propriétés graphiques des liens sont avantageusement stockées dans la base de données.

La base de données conserve les différentes valeurs successives des propriétés graphiques de chaque lien, avec la date de modification de chaque propriété.

Chaque lien est en outre associé à au moins une plage de dates de validité. Par exemple, un lien li peut être associé à une plage de dates de validité entre les instants t_{i-d} et t_{i-f}.

Lors de la création et/ou de l'insertion d'un lien lᵢ sur l'espace graphique, la date de début de validité de ce lien t_{i-d} correspond de préférence à la date courante de la plage de visualisation sélectionnée. Une date de fin de validité de ce lien t_{i-f} est de préférence créée, qui correspond à l'infini, et mémorisée. Ainsi le lien est par défaut associé lors de sa création et/ou de son insertion à une plage de dates de validité débutant à la date de création/insertion et se terminant à l'infini, comme si le lien n'expirait jamais.

La date de début t_{i-d} de validité d'un lien lᵢ peut être modifiée, par exemple en l'éditant manuellement ou en sélectionnant une nouvelle date dans un calendrier. La date de fin t_{i-f} de validité d'un lien lᵢ peut aussi être éditée, par exemple en l'éditant manuellement ou par sélection dans un calendrier. Dans un mode de réalisation, la date de fin de validité d'un lien t_{i-f} est remplacée par la date courante de la plage de visualisation sélectionnée lorsque ce lien est supprimé de l'espace graphique, par exemple au moyen d'une commande d'effacement (« release »). Le lien lui-même n'est cependant pas supprimé. Ainsi, le rangement de l'espace graphique 1, par exemple du bureau, peut être effectué très simplement en effaçant les liens que l'utilisateur ne souhaite plus voir; aucune information n'est supprimée par cette manipulation et l'utilisateur peut aisément revenir à l'état antérieur et revoir ce lien.

Le procédé peut aussi associer à un lien lᵢ dont une plage de dates de validité est échue, une nouvelle plage de dates de validité démarrant à la date à laquelle le fichier pointé par le lien subit une interaction avec l'utilisateur.

Les différentes propriétés définissant l'apparence graphique d'un lien (position, dimension, texte, icône, etc) peuvent aussi être associées à une plage de validité ininterrompue ou a plusieurs plages de dates de validité consécutives, de sorte que, quelle que soit la date courante, il existe une plage valide définissant ces propriétés.. Ainsi une position x,y particulière d'un lien peut être valide pendant une plage déterminée, puis devenir invalide après le déplacement du lien. L'ancienne position n'est pas supprimée et il est possible d'y revenir en tout temps, en modifiant la date courante affichée. La ou les plages de validité d'une propriété peuvent être différente de la plage de dates de validité du lien correspondant; par exemple, une position ou une dimension peuvent être modifiés plusieurs fois pendant la validité du lien, ou même lorsque le lien est invalide.

Le programme permet à l'utilisateur de choisir une plage de visualisation p. La plage de visualisation p sélectionnée peut comprendre des dates dans le passé, dans le présent et dans le futur. La plage de visualisation p choisie est avantageusement affichée sur une ligne de temps 10, par exemple en haut de l'espace graphique 1, au moyen d'un segment coloré entre une extrémité 11 marquant le début de la plage de visualisation et une extrémité 12 marquant la fin de la plage de visualisation p. Il est possible de modifier la plage de visualisation p en déplaçant les extrémités 11 et/ou 12, de manière quasi continue.

Différentes manières peuvent être prévues pour déplacer ces extrémités 11 et 12, ou d'autres dates sur la ligne de temps 10. Une date peut par exemple être modifiée en déplacement un élément graphique le long de la ligne de temps avec la souris. Un déplacement continu peut être obtenu avec la roulette de la souris ou avec un trackpad. Un menu ou une boite de dialogue peuvent être utilisés pour introduire de nouvelles dates.

L'échelle de la ligne de temps 10 peut être modifiée par l'utilisateur, ou adaptée automatiquement lorsque l'utilisateur modifie la plage de visualisation, ou encore à la demande par exemple avec un clic droit sur la plage de post-visualisation pour adapter automatiquement l'échelle en fonction de la durée demandée. Il est par exemple possible d'afficher sur l'espace graphique 1 une portion de ligne de temps 10 correspondant à un jour, une semaine, un mois etc.

La plage de visualisation p comporte une date courante entre la date de début et la date de fin de plage de visualisation. Cette date courante peut être marquée par un symbole 16, par exemple un curseur, sur la ligne de temps 10. Elle peut être modifiée de la même façon et avec les mêmes commandes que les extrémités 11, 12 de la plage de visualisation p.

A l'ouverture du programme, la date courante 16 est de préférence la date actuelle, ou la dernière date courante sauvegardée. La date courante peut cependant être choisie par l'utilisateur, par exemple en déplaçant le symbole 16 de manière quasi-continue, et être différente de la date actuelle. Comme on le verra, la modification de la date courante permet de visualiser l'état des liens à une autre date.

La plage de visualisation p avance de préférence automatiquement avec le temps ; la date 16 peut par exemple être calée en tout temps sur le présent, et les limites 11 et 12 se déplacer simultanément avec la date 16.

La plage de visualisation p peut donc comporter un intervalle entre le début de plage de visualisation 11 et la date courante 16 ; cette portion sera appelée une portion de plage de post-visualisation. La portion entre la date courante 16 et la fin de plage de visualisation 12 sera appelée plage de pré-visualisation. Ces deux portions peuvent être représentées avec des couleurs différentes sur la ligne de temps 10.

Les dates de début de plage de visualisation 11, de fin de plage de visualisation 12, ainsi que la date courante 16 de la plage de visualisation p, peuvent en outre être affichées séparément dans des zones réservées, respectivement 13, 14 et 15, de l'espace graphique 1.

Il est possible de créer une plage de visualisation de travail (« now »), et une autre plage de visualisation (« search ») destinée à la recherche de liens dans une plage différente de la plage actuelle.

Il est possible de créer plusieurs plages de visualisation p₁, p₂, .., pₙ, , et d'en sélectionner une ou plusieurs à un instant donné.

Il est de préférence possible de mettre en pause l'avance automatique de la plage de visualisation p, ou d'une plage de visualisation de recherche. Il est de préférence aussi possible de rejouer à une vitesse qui peut être différente l'avance d'une plage de visualisation, de manière à revoir, éventuellement en accéléré, les ajouts et suppressions de liens et les modifications des propriétés des liens affichés.

Dans un mode de réalisation, il est possible de créer des plages de visualisation constituées de plusieurs segments discontinus; par exemple, de sélectionner une plage de visualisation correspondant à tous les mardis, ou d'autres plages de visualisation répétitives à intervalles sélectionnables.

Un calendrier avec montre 17 peut aussi être prévu, en addition ou en remplacement de la ligne 10, pour sélectionner la date courante 16 de la plage p de visualisation, ou les extrémités 11, 12 de cette plage.

Seuls les liens lᵢ associé à une plage de dates de validité au moins partiellement comprise dans la plage de visualisation p sélectionnée sont affichés sur l'espace graphique 1. Chaque lien lᵢ est affiché sur l'espace graphique à la position verticale yᵢ et horizontale xᵢ qui lui est associée dans la base de données. Cette position (xᵢ, yᵢ) peut être modifiée par l'utilisateur par exemple en faisant glisser le lien avec la souris sur l'espace graphique. L'utilisateur peut de préférence aussi modifier la dimension de la représentation du lien et/ou son titre.

La position x, y à laquelle les liens lᵢ sont affichés est de préférence celle qui leur est associée à la date courante 16 choisie par l'utilisateur.

La dimension dans laquelle les liens lᵢ sont affichés est de préférence celle qui leur est associée à la date courante 16 choisie.

Le texte et/ou l'image utilisé pour afficher un lien lᵢ est de préférence celui qui leur est associé à la date courante 16 choisie.

Par conséquent, dans un mode de réalisation préférentiel, tous les liens lᵢ associés à au moins une plage de dates de validité qui est au moins partiellement comprise dans la plage de visualisation sélectionnée sont affichés; ils le sont avec les propriétés graphiques associées à ces liens au moment de la date courante 16 choisie par l'utilisateur.

Lorsqu'un lien n'est pas valide à la date courante 16, mais que sa plage de dates de validité recouvre néanmoins la plage de visualisation p choisie, il est néanmoins affiché. Si ce lien était valide avant la date courante 16, il est affiché à la position, avec la dernière dimension et le dernier texte ou l'image qui lui sont associés à l'intérieur de la plage de post-visualisation. Si ce lien est uniquement valide après la date courante, il est affiché à la dernière position, avec la dernière dimension et le dernier texte ou image qui lui sont associés à l'intérieur de la plage de pré-visualisation.

Les liens uniquement valides pendant la plage de post-visualisation sont de préférence affichés différemment des liens également valides à la date courante, par exemple en semi-transparence. Les liens uniquement valides pendant la plage de pré-visualisation sont de préférence affichés différemment des liens également valides à la date courante, par exemple entouré d'un traitillé. Les liens valides pendant la plage de post-visualisation ET pendant la plage de pré-visualisation, mais pas à la date courante, sont affichés à la dernière position, avec la dernière dimension et le dernier texte ou image qui leur sont associés à l'intérieur de la plage de pré-visualisation, et entouré d'un traitillé. De cette manière, l'utilisateur peut détecter rapidement les liens du passé et les liens du futur.

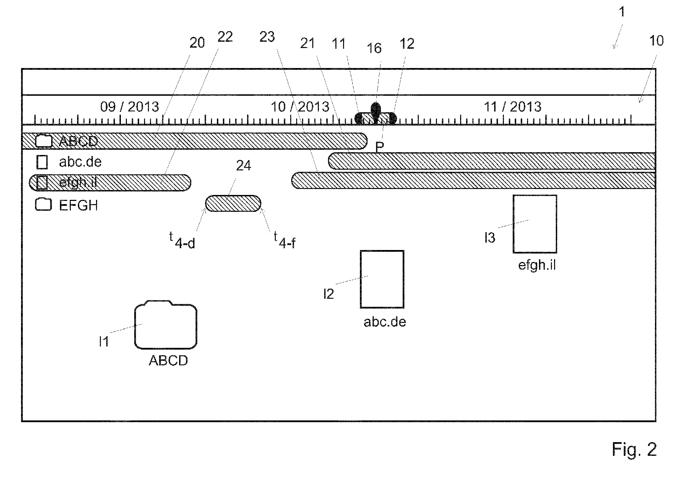

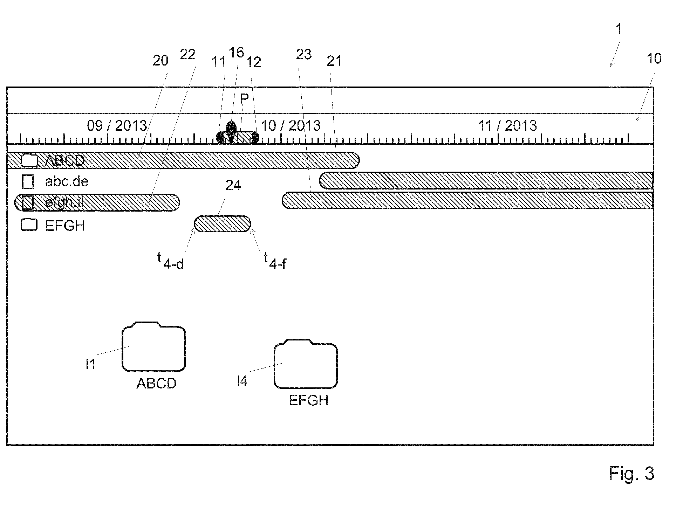

Comme illustré sur les figures 2 et 3, l'utilisateur peut ainsi faire défiler l'état des liens l₁ -l₄ sur l'espace graphique en fonction de leur plage de dates de validité, en décalant ou en redimensionnant la plage de visualisation p. On observe par exemple qu'en déplaçant la plage de visualisation vers le passé entre la figure 2 et la figure 3, le lien l₃ disparait car il est associé à une plage de dates de validité qui ne recouvre plus la plage de visualisation sélectionnée sur la figure 3.

Cela permet à un utilisateur de se replonger dans le contexte des fichiers et des liens correspondant à une date particulière 16, ou à une plage de dates sélectionnable librement.

Les figures 2 et 3 montrent également l'affichage dans une zone « SelectionView » sous la ligne de temps des plages de dates de validité 20 à 24 associées aux liens sélectionnés. Sur la figure 2, les plages de dates de validité associées aux quatre liens l₁, l₂, l₃ et l₄ sont affichées en dessous de la ligne de temps 10. Le lien sélectionné l₄ vers le fichier EFGH n'est pas affiché sur l'espace graphique de la figure 2 car sa plage de dates de validité 24 (t_{4-d} à t_{4-f}) ne recouvre pas la plage de visualisation p sélectionnée ; ce lien apparait sur la figure 3 dans laquelle la plage p a été déplacée. Les liens l₂ et l₃ ayant des plages de validité 21,22, 23 ne possédant pas de dates inscrites dans la nouvelle plage de visualisation p, ils ne sont plus affichés sur la surface d'affichage 1 de la figure 3.

La plage de dates de validité d'un lien est affichée à la demande, par exemple lorsque ce lien est sélectionné par un clic, en appuyant sur ce lien sur un écran tactile, en accédant à un menu contextuel, et/ou en tirant ce lien vers une barre de temps. De manière analogue, la sélection simultanée d'une pluralité de liens sur l'espace graphique peut provoquer l'affichage d'une pluralité correspondante de lignes de temps montrant la ou les plages de validité de ces liens sélectionnés.

Comme illustré dans l'exemple des figures 2 et 3, un lien peut être associé à plusieurs plages de validités discontinues. Par exemple, le lien l₃ est valide depuis une première date, devient invalide depuis une deuxième date puis redevient valide ultérieurement, comme illustré avec les plages de validité 22 et 23. Ce lien est uniquement affiché sur l'espace graphique 1 si la plage de visualisation p choisie recouvre au moins partiellement une de ses plages de validité 22 ou 23.

Un lien lᵢ périmé, ou dont la date de fin de validité est antérieure à la date courante de la plage de visualisation sélectionnée , peut être réintroduit par une seule opération (que l'on pourrait appeler « recall »), par exemple dans un menu ou par un long clic ou clic droit sur ce lien. Cette opération associe à ce lien une nouvelle plage de dates de validité débutant à la date courante de la plage de visualisation sélectionnée ou d'une autre plage de visualisation choisie au moment du recall et se terminant à l'infini ou à la prochaine plage de dates de validité si une plage ultérieure est définie. Un utilisateur qui souhaite éditer un ancien lien peut ainsi facilement le replacer sur l'espace graphique 1. Un recall à la date actuelle peut aussi être défini, afin de ramener un lien dans le présent même si la date courante est différente de la date actuelle.

La date de fin de validité d'un lien lᵢ périmé peut aussi être prolongée jusqu'à la date courante de la plage de visualisation sélectionnée, par une seule opération que l'on pourrait appeler « retain ». Cette opération peut par exemple être accessible dans un menu ou par un long clic ou clic droit sur ce lien. Cette opération prolonge la plage de dates de validité du lien jusqu'à la date courante de la plage de visualisation sélectionnée. Un utilisateur qui ne souhaite pas qu'un ancien lien s'éloigne trop dans le passé peut ainsi le retenir (retain) jusqu'à la date courante, sans créer de plages disjointes.

Il est parfois souhaitable de supprimer le passé d'un lien lᵢ, pour éviter de le revoir à chaque fois que l'on recule la date courante 16 vers le passé. Cette suppression peut être effectuée en une seule opération, que l'on pourrait appeler « forget », et a pour effet de déplacer le début de validité d'un lien valide à la date courante sélectionnée 16.

L'édition, la suppression ou la modification d'un document numérique pointé par un lien lᵢ ont un effet sur toutes les apparitions de ce lien lᵢ sur l'espace graphique 1 ; la modification de la plage de visualisation n'a pas pour effet de revenir à l'état antérieur du document numérique pointé par le lien ni d'afficher une autre version de ce document. L'adresse pointée par le lien lᵢ est la même quelle que soit la plage de dates de validité ou de date de visualisation sélectionnée à un moment donné.

Dans les modes de réalisation ci-dessus, la position verticale yᵢ d'un lien lᵢ est déterminée par l'utilisateur ou par le programme d'insertion automatique de lien ; elle peut être choisie arbitrairement. Il est cependant aussi possible d'affecter une signification à cette position verticale. Par exemple, la position verticale d'un lien peut correspondre à un contexte d'utilisation du lien et définir le contexte (famille, hobby, activité, vacances etc) dans lequel le lien est pertinent. Alternativement, la position verticale du lien peut indiquer un contexte de partage, par exemple un cercle d'utilisateurs avec lesquels le lien ou le document numérique (privé, public, etc) pointé par le lien est partagé.

De nombreux liens ne sont pas liés strictement à une seule activité ou à un seul contexte, mais peuvent se trouver à cheval entre deux contextes, ou être multi-contextes. Il est ainsi de préférence possible d'associer une ou plusieurs plages de contexte à un seul lien ; par exemple, un lien particulier peut être associé à un contexte « vacances » et aussi, partiellement, à un contexte « tennis ». Les limites des plages de contexte peuvent de préférence varier de manière quasi continue, sans à-coup et sans rupture brutale en passant d'un contexte à un autre.

Dans un mode de réalisation, les liens lᵢ affichés sur l'espace graphique 1 peuvent en outre être filtrés au moyen de champs de filtre non illustrés, par exemple de filtres accessibles dans un menu ou via une zone réservée de l'écran. Il est possible par exemple, d'associer un type de document, des mots-clés (« tags »), des notes, un auteur ou d'autres attributs à chaque lien, et de filtrer l'espace graphique pour n'afficher que les liens correspondant au ou aux critères de filtre choisis.

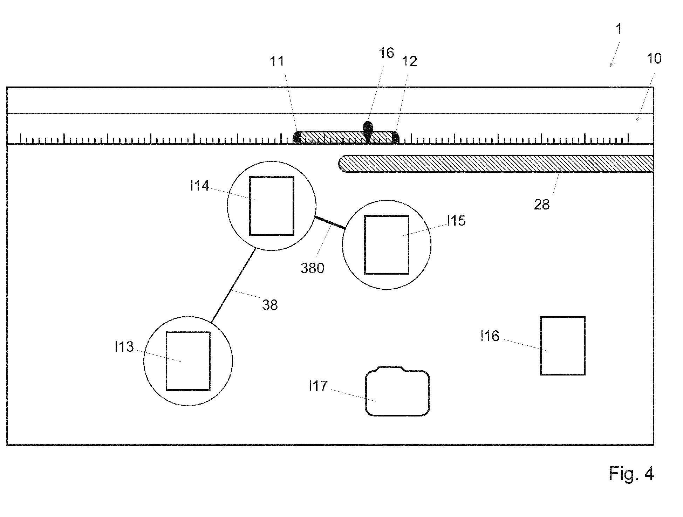

La figure 4 illustre un espace graphique d'un dispositif de traitement numérique affichant des liens l₁₃-l₁₇ ainsi que des connexions 38, 380 entre certains de ces liens. Ces connexions sont visualisées sur l'espace graphique 1, et représentées dans cet exemple au moyen de lignes entre les liens concernés; il est aussi possible de marquer spécialement les liens qui partagent une connexion avec un autre lien, et de retrouver ces autres liens en sélectionnant ce marquage.

Il est possible de sélectionner une connexion, par exemple en cliquant dessus. La connexion sélectionnée 380 est marquée différemment des autres connexions pour la distinguer.

Les connexions 38, 380 peuvent être tracées manuellement par l'utilisateur entre des liens qui se rapportent à des activités ou à des sujets semblables, par exemple en tirant un trait entre deux liens ou en entourant les liens à connecter.

Un module informatique d'insertion de connexion peut aussi être prévu. Par exemple, lors de l'insertion automatique d'un nouveau lien, le programme d'insertion de liens peut créer automatiquement des connexions vers des liens existants. Le module peut aussi analyser les liens en cours d'insertion, ou les liens déjà insérés, pour créer automatiquement des connexions. Il est ainsi possible d'insérer automatiquement des connexions entre liens associés à des plages de validité identiques, qui se recoupent partiellement, ou même complètement disjointes; par exemple, une connexion peut être établie entre un lien lᵢ qui vient d'être introduit et un lien lⱼ périmé dont la date de validité est échue.

De manière similaire aux liens, une connexion peut être associée à une ou plusieurs plages de validité temporelle de la connexion. La plage de dates de validité 28 associée à la connexion sélectionnée 380 est affichée sur la figure 4. Un lien peut alors être connecté à un autre lien pendant une durée déterminée. En sélectionnant une plage de visualisation p, l'espace graphique 1 affiche uniquement les connexions dont la plage de dates de validité est au moins partiellement comprise dans la plage de visualisation p sélectionnée.

Le procédé peut prévoir une seule plage de visualisation commune pour les liens et pour les connexions, comme illustré sur la figure 4. Dans une variante, le procédé peut prévoir deux plages de visualisation séparées l'une de l'autre, une pour les liens et l'autre pour les connexions.

Une option de recherche de liens partageant une connexion avec un autre lien déterminé peut être prévue. Cela permet par exemple de retrouver rapidement tous les liens connectés à un lien donné, même si la plage de dates de validité de ces liens connecté ne correspond pas à la plage de visualisation p sélectionnée. La recherche peut être effectuée dans une plage de visualisation Search destinée à la recherche, qui peut être différente de la plage de visualisation principale Now.

On peut aussi prévoir un affichage des liens sous forme de liste, sans tenir compte des propriétés graphiques qui leur sont attribuées, ou en tenant compte uniquement de leur nom et/ou de leur icône par exemple, mais pas de leur position ou dimension. Chaque liste peut être affichée dans une fenêtre séparée, avec des liens successifs les uns au-dessus des autres. Une liste permet d'afficher les plages de dates de validité associée à chaque lien. Plusieurs listes, que l'on pourrait appeler « entités », peuvent être prévues pour regrouper chacune des liens d'un type particulier différent des autres listes. Par exemple, une entité pourrait être prévue pour afficher tous les liens vers les fichiers ; une autre pour afficher les liens vers les contacts; une autre pour afficher les liens vers des images; etc. Ainsi, il est possible de visualiser rapidement dans l'entité « fichier » tous les fichiers valides dans un contexte temporel donné, c'est-à-dire dans une plage de visualisation. La fenêtre entité permet aussi de tracer de nouvelles connexions entre liens, et/ou de modifier les plages de dates de validité associée à chaque lien.

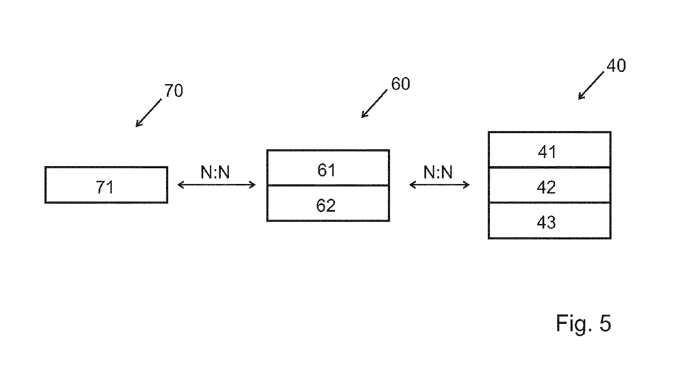

La figure 5 illustre un exemple de structure de la base de données collectant les liens lᵢ. Cette base de données peut comprendre une table 40 dans laquelle chaque enregistrement correspond à un lien lᵢ. Les champs de cette table incluent par exemple un identificateur de lien 41, un pointeur 42 vers un document numérique (par exemple une adresse URI), des informations 43 concernant le fichier pointé (par exemple les propriétés définissant sa représentation graphique telles que la position x, y, la dimension, le texte associé, l'icône, etc).

Une relation de type N-N est établie entre cette table de liens 40 et une table de dates 60 dont chaque enregistrement contient une date de début ou de fin de validité 62, ainsi qu'un identificateur de date 61. Cette structure de la base de données permet de définir plusieurs plages de date de validité d'un lien sans modifier la structure et la taille de l'enregistrement 40.

Dans une variante préférentielle non représentée, les propriétés définissant la représentation graphique du lien sont stockées dans des tables séparées de la table 40, et liées avec des relations N-N à cette table. De cette manière, plusieurs propriétés graphiques, valides à des dates différentes, peuvent être mémorisées.

Cette structure pourrait être réalisée au moyen d'une base de données relationnelle de type SQL par exemple. Dans un mode de réalisation préférentiel, et de manière inattendue, cette structure de base de données est réalisée avec la structure décrite dans la demande de brevet WO2008/043392. Ce procédé permet de stocker l'ensemble de l'information pertinente sous forme de quadruplets temporels. Il en résulte une structure dans laquelle tous les quadruplets qui représentent les liens lᵢ ou les propriétés de ces liens ont la même taille et la même structure, ce qui permet un traitement rapide et une sélection simplifiée des dates de validité associées à chaque information.

La table 70 contenant les identités 71 de différents utilisateurs ou de différents espaces, et permet d'utiliser différents espaces graphiques 1 pour différents utilisateurs ou pour différentes utilisations d'un seul utilisateur. En associant ces utilisateurs aux dates du tableau 60, il est possible de filtrer de manière efficace les liens selon leur appartenance à un utilisateur particulier, à un groupe et/ou à une pluralité d'utilisateurs différents, ou à différentes utilisations d'un même utilisateur. On peut ainsi réaliser plusieurs collections de liens affichées différemment ou associées à des dates différentes selon l'utilisateur sélectionné ; les propriétés de ces liens restent partagées entre les différents utilisateurs.

### Numéros de référence employés sur les figures

- lᵢ: Lien vers un document numérique
- xᵢ: Position horizontal du i^{ième} lien
- yᵢ: Position vertical du i^{ième} lien
- t_{i-d}: Date de début de validité du i^{ième} lien
- t_{i-f}: Date de fin de validité du i^{ième} lien
- 1: Espace graphique
- 10: Ligne de temps pour sélectionner la plage de visualisation p
- 11: Curseur de début de la plage de visualisation p
- 12: Curseur de fin de la plage de visualisation p
- 13: Date de début de la plage de visualisation
- 14: Date courante
- 15: Date de fin de la plage de visualisation
- 16: Indicateur de la date courante
- 17: Calendrier avec montre
- 18: Graduation de la ligne de temps (semaine)
- 19: Graduation de la ligne de temps (jour)
- 20-24: Plage de dates de validités de différents liens
- 28: Plage de dates de validité d'une connexion
- 40: Table de liens »
- 41: Identificateur de lien
- 42: Adresse du document numérique pointé par le lien
- 43: Propriétés du document numérique pointé
- 60: Table de dates
- 61: Identificateur de dates
- 62: Date
- 70: Table d'utilisateurs
- 71: Identificateur d'utilisateur
- p: Plage de visualisation

## Revendications

1. Procédé pour stocker et afficher sur un espace graphique (1) d'un dispositif de traitement numérique des liens (lᵢ) vers des documents numériques, comprenant les étapes suivantes :
stockage d'au moins un lien (lᵢ) vers un dit document numérique ;
association à chaque lien (lᵢ) d'au moins une plage de dates de validité (20-24 ; t_{i-d} ; t_{i-f}) ;
association à chaque lien (lᵢ) d'une position (xᵢ, yᵢ) ;
sélection d'une plage de visualisation(p) ;
affichage sur ledit espace graphique (1) du ou des liens (lᵢ) associés à une plage de dates de validité (20-24) au moins partiellement comprise dans la plage de visualisation (p) sélectionnée, chaque lien (lᵢ) étant affiché dans le dit espace graphique à la position (xᵢ ; yᵢ) qui lui est associée.

2. Le procédé selon la revendication 1, au moins un dit lien (l₃) étant associé à plusieurs plages de validités (22, 23) discontinues.

3. Le procédé selon l'une des revendications 1 ou 2, comportant le choix par l'utilisateur d'une date courante (16), lesdits liens (lᵢ) associés à au moins une plage de dates de validité (20-24) au moins partiellement comprise dans la plage de visualisation (p) sélectionnée étant affichés à la position correspondant à la date courante choisie.

4. Le procédé selon la revendication 3, comportant un déplacement d'au moins un lien sur ledit espace graphique lorsque la date courante (16) est modifiée.

5. Le procédé selon l'une des revendications 1 à 4, au moins un lien étant associé à différentes positions (xᵢ, yᵢ) consécutives à l'intérieur d'une plage de validité, ces différentes positions étant mémorisées.

6. Le procédé selon l'une des revendications 1 à 5, ladite sélection de plage de visualisation (p) comportant la sélection d'une date de début de plage de visualisation (11) et la sélection d'une date de fin de plage de visualisation (12), lesdites dates de début de plage de visualisation et de fin de plage de visualisation étant sélectionnable de manière quasi continue.

7. Le procédé selon la revendication 6, lesdites dates de début de plage de visualisation (11) et de fin de plage de visualisation (12) étant sélectionnées en déplaçant des éléments graphiques (11, 12) respectifs sur une ligne de temps (10) graduée.

8. Le procédé selon l'une des revendications 6 à 7, ladite plage de visualisation (p) pouvant comprendre des dates dans le passé, dans le présent et dans le futur,
le procédé comprenant l'affichage d'un symbole (16) sur ladite ligne de temps à la date courante,
au moins un dit lien (lᵢ) étant associé à une plage de dates de validité (20-24) comprenant des dates postérieures à la date courante (16).

9. Le procédé selon l'une des revendications 1 à 8, dans lequel la sélection d'un lien (lᵢ) sur ledit espace graphique (1) provoque l'affichage de la ou des plages de dates de validité (20-24) de ce lien.

10. Le procédé selon l'une des revendications 1 à 9, mettant en oeuvre une base de données avec des enregistrements de liens (40), des enregistrements de date (60) et une relation N-N entre les enregistrements de liens et de date.

11. Le procédé selon la revendication 10, dans laquelle les liens et les dates sont stockés dans une base de données de type HIP (Hyper Information Processing).

12. Le procédé selon l'une des revendications 1 à 11, comportant une étape d'insertion automatique d'un lien (lᵢ) vers un document numérique lors d'une interaction de l'utilisateur avec ce document numérique.

13. Le procédé selon l'une des revendications 1 à 12, comportant une étape d'insertion d'un dit lien (lᵢ), d'association audit lien d'une position horizontale (xᵢ) et verticale (yᵢ) en fonction de la position à laquelle ce lien est placé sur ledit espace graphique, et de détermination d'une date de début de validité du dit lien (t_{i-d}) correspondant à la date d'insertion du lien, et d'une date de fin de validité du dit lien (t_{i-f}) à l'infini.

14. Le procédé selon la revendication 13, comportant une étape de remplacement de la dite date de fin de plage de dates de validité d'un lien (t_{i-f}) par la date courante (16) lorsque ledit lien est effacé de l'espace graphique (1).

15. Le procédé selon l'une des revendications à 1 à 14, comportant une étape de création de connexions (38) entre différents liens (lᵢ), lesdites connexions étant visualisées sur ledit espace graphique (1).

16. Le procédé selon la revendication 15, au moins une dite connexion (380) étant associée à une plage de dates de validité (28) temporelle de la connexion.

17. Le procédé selon l'une des revendications 15 ou 16, au moins une dite connexion (38) entre deux liens étant insérée manuellement par l'utilisateur, au moins une autre dite connexion entre deux autres liens étant insérée automatiquement par un module informatique détectant qu'une connexion doit être insérée.

18. Support de données informatiques comprenant un programme informatique destiné à être exécuté par un système de traitement numérique pour lui faire exécuter le procédé de l'une des revendications 1 à 17.
